# EUROPÄISCHE PATENTSCHRIFT

(11) **EP 2 844 942 B1**
(45) Veröffentlichungstag und Bekanntmachung des Hinweises auf die Patenterteilung: **21.11.2018**
(21) Anmeldenummer: 13719117.7
(22) Anmeldetag: 29.04.2013
(51) Int. Cl.: F28F 3/12, F28F 13/12, F24H 1/00, F24H 1/12

(54) **HEIZVORRICHTUNG FÜR EIN FAHRZEUG UND VERFAHREN ZUM BETREIBEN DER HEIZVORRICHTUNG**
HEATING DEVICE FOR A VEHICLE AND METHOD FOR OPERATING SAID HEATING DEVICE
SYSTÈME DE CHAUFFAGE POUR UN VÉHICULE ET PROCÉDÉ PERMETTANT DE FAIRE FONCTIONNER LE SYSTÈME DE CHAUFFAGE

(30) Priorität: 02.05.2012 DE 102012207305
(43) Veröffentlichungstag der Anmeldung: 11.03.2015
(73) Patentinhaber: Webasto SE, 82131 Stockdorf (DE)
(72) Erfinder: ECKERT, Daniel, 82131 Stockdorf (DE); WEGENER, Fritz, 82205 Gilching (DE); STAAKE, Michael, 82131 STOCKDORF (DE); LARISCH, Florian, 82299 Zankenhaussen (DE)
(74) Vertreter: Schumacher & Willsau
(86) Internationale Anmeldenummer: PCT/EP2013/058919
(87) Internationale Veröffentlichungsnummer: WO 2013/164314

(56) Entgegenhaltungen:
- EP-A2- 1 475 579
- DE-A1- 19 831 282
- FR-A1- 2 943 296
- GB-A- 2 413 842
- JP-A- H11 135 241
- US-A- 5 170 319
- US-A- 5 983 997
- US-A1- 2006 002 088
- US-A1- 2012 037 606

## Beschreibung

Die Erfindung betrifft eine Heizvorrichtung für ein Fahrzeug und ein Verfahren zum Betreiben einer Heizvorrichtung in einem Fahrzeug.

Elektrische Heizvorrichtungen finden beispielsweise in Kraftfahrzeugen als Zusatzheizung oder Standheizung Anwendung. Eine elektrische Heizvorrichtung weist üblicherweise mindestens eine elektrische Heizeinrichtung zum Erzeugen von Wärme und zur Abgabe von erzeugter Wärme an ein Wärmetransportmittel auf. Das Wärmetransportmittel kann beispielsweise Wasser oder eine andere geeignete Wärmetransportflüssigkeit sein.

Die elektrische Heizeinrichtung kann mit einer elektronischen Steuereinrichtung verbunden sein, die es erlaubt, die Heizleistung der Heizeinrichtung zu steuern. Die elektronische Steuereinrichtung kann beispielsweise einen Leistungstransistor oder einen elektronischen Schaltkreis auf Halbleitergrundlage aufweisen, beispielsweise zum Steuern eines elektrischen Stroms in der Heizeinrichtung oder zum Steuern einer an der Heizeinrichtung anliegenden Spannung. Der Leistungstransistor kann zum Beispiel ein Bipolartransistor mit isolierter Gate-Elektrode (IGPT) sein. Der Leistungstransistor kann elektrisch in Reihe mit einem Heizelement, zum Beispiel einem Heizwiderstand geschaltet sein. Die elektronische Steuereinrichtung erzeugt als Nebeneffekt typischerweise Wärme, die als Abwärme abgeführt werden muss, damit die Steuereinrichtung nicht überhitzt. Beispielsweise kann eine Luftkühlung vorgesehen sein, die es erlaubt, die Abwärme über zugeführte Luft abzuführen. Die elektronische Steuereinrichtung kann beispielsweise in einem Luftkanal angeordnet sein, der von Luft durchströmbar ist. Innerhalb des Kanals kann ein Gebläse, zum Beispiel ein Ventilator, angeordnet sein, um einen Luftstrom zu erzeugen. Die von der elektronischen Heizvorrichtung vorgewärmte Luft kann weiter durch die Heizvorrichtungen geführt werden, um sie weiter auf die gewünschte Temperatur zu erhitzen. Die erhitzte Luft kann anschließend an ihren Bestimmungsort weitergeleitet werden, zum Beispiel in eine Fahrgastzelle eines Fahrzeugs. Eine Heizvorrichtung nach dem Stand der Technik ist aus der FR-2 943 296 bekannt.

Der Erfindung liegt die Aufgabe zugrunde, eine möglichst kompakte, robuste, energiesparende und bautechnisch einfache elektrische Heizvorrichtung zu schaffen. Der Erfindung liegt ferner die Aufgabe zugrunde, ein energieeffizientes und konstruktionstechnisch einfach zu realisierendes Verfahren einer Heizvorrichtung in einem Fahrzeug anzugeben. Die Aufgaben werden durch die Merkmale der unabhängigen Ansprüche gelöst. Die abhängigen Ansprüche beschreiben Weiterbildungen und vorteilhafte Ausführungsformen. Nachfolgend wird eine Heizvorrichtung für ein Fahrzeug beschrieben, mit einem Strömungsweg für ein flüssiges Wärmetransportmittel und einer elektrischen Heizeinrichtung zum Erhitzen des Wärmetransportmittels auf einem Heizabschnitt des Strömungsweges.

Der Heizabschnitt weist wenigstens zwei serpentinenförmig verlaufende Kanäle auf, die von dem Wärmetransportmittel parallel durchströmbar sind. Die Parallelschaltung der Kanäle hat gegenüber einer alternativen Ausgestaltung mit nur einem einzigen serpentinenförmig verlaufendem Kanal oder gegenüber einer Reihenschaltung den Vorteil, dass der Druckverlust in dem Wärmetransportmittel auf dem Heizabschnitt geringer ist. Eine Pumpe oder sonstige Antriebsvorrichtung zum Bewegen des Wärmetransportmittels kann deshalb mit einer geringeren Leistung betrieben werden und entsprechend leistungsschwächer ausgelegt sein. Im Vergleich zu einer weiteren alternativen Ausgestaltung, bei der mehrere (das heißt mindestens zwei) geradlinige Kanäle parallel zueinander geschaltet sind, bietet die hier beschriebene Serpentinenform den Vorteil, dass sie Turbulenzen innerhalb des Wärmetransportmediums bewirkt und somit eine Überhitzung oder ein Sieden des Wärmetransportmittels vermeidet oder verzögert. Die Parallelschaltung mehrerer serpentinenförmig verlaufender Kanäle ist somit ein Kompromiss zwischen diesen beiden alternativen Ausführungsformen, das heißt, ein Kompromiss zwischen einem einzigen serpentinenförmig verlaufenden Kanal und mehreren parallel geschalteten geradlinigen Kanälen. Dieser Kompromiss ist einerseits turbulenzfördernd und bringt andererseits einen verhältnismäßig geringen Druckabfall auf dem Heizabschnitt mit sich.

Der Strömungsweg weist einen Einlassabschnitt stromaufwärts des Heizabschnittes und einen Auslassabschnitt stromabwärts des Heizabschnittes auf, wobei die Kanäle von dem Einlassabschnitt abzweigen und in den Auslassabschnitt münden. Die Kanäle verbinden somit den Einlassabschnitt mit dem Auslassabschnitt. Für die Kanäle ist somit ein gemeinsamer Einlassabschnitt und ein gemeinsamer Auslassabschnitt vorgesehen.

Dies ermöglicht die Einsparung von Bauteilen, zum Beispiel im Vergleich zu einer Gruppe identischer Heizvorrichtungen mit jeweils genau einem Kanal.

Der Einlassabschnitt kann derart gestaltet sein, dass seine Querschnittsfläche in Strömungsrichtung des Wärmetransportmittels den Abzweigungen der Kanäle entsprechend abnimmt. Der Einlassabschnitt kann analog hierzu so gestaltet sein, dass seine Querschnittsfläche in Strömungsrichtung des Wärmetransportmittels den Einmündungen der Kanäle entsprechend zunimmt. Hierdurch kann erreicht werden, dass an den Abzweigungen jeweils in etwa derselbe Druck anliegt. Beispielsweise können die Abzweigungen und/oder die Einmündungen jeweils durch einen Kasten miteinander verbunden sein, welcher den Einlassabschnitt beziehungsweise den Auslassabschnitt definiert. Der Kasten kann so gestaltet sein, dass an den Kanälen jeweils derselbe Druck anliegt. Es kann somit vorgesehen sein, dass sich der den Einlassabschnitt definierende Kasten (Einlasskasten) in Strömungsrichtung verjüngt. Ähnlich kann vorgesehen sein, dass sich der den Auslassabschnitt definierende Kasten (Auslasskasten) in Strömungsrichtung erweitert. Die einzelnen Kanäle können identisch gestaltet sein. Dies kann Vorteile bei der Berechnung ihrer Geometrie mit sich bringen.

Der Einlassabschnitt und der Auslassabschnitt können zum Beispiel länglich sein und sich parallel zueinander erstrecken. Der Raumbereich zwischen dem Einlassabschnitt und dem Auslassabschnitt erhält damit eine konstante Querabmessung, was für die Anordnung der Kanäle zwischen dem Einlassabschnitt und dem Auslassabschnitt vorteilhaft ist. Es kann vorgesehen sein, dass die Kanäle jeweils in einem rechten Winkel von dem Einlassabschnitt abzweigen und in einem rechten Winkel in den Auslassabschnitt münden. Dies begünstigt die Entstehung von Turbulenzen an den Abzweigestellen und den Mündungsstellen. Ferner erlaubt es die Anordnung eines Einlasses und eines Auslasses für das Wärmetransportmedium in einer gemeinsamen Ebene, zum Beispiel auf einer Stirnseite der Heizvorrichtung.

Ferner kann vorgesehen sein, dass jeder der Kanäle genau 2*N-Haarnadelkurven aufweist, wobei N eine natürliche Zahl ist. Eine Haarnadelkurve ist in diesem Zusammenhang eine Kurve mit einem Winkel zwischen 150° und 180°. Eine Haarnadelkurve bewirkt somit eine Änderung der Strömungsrichtung des Wärmetransportmittels um diesen Winkel. Die gerade Anzahl der Haarnadelkurven begünstigt einen größeren räumlichen Abstand zwischen dem Einlassabschnitt und dem Auslassabschnitt. Dies kann die Geometrie des Strömungsweges vereinfachen.

Der Strömungsweg kann einen Einlass stromaufwärts des Einlassabschnitts zum Einlassen des Wärmetransportmittels in die Heizvorrichtung sowie einen Auslass stromabwärts des Auslassabschnitts zum Auslassen des Wärmetransportmittels aus der Heizvorrichtung aufweisen. Die Heizvorrichtung kann damit als ein Modul innerhalb eines Wärmekreislaufs verwendet werden. Der Wärmekreislauf kann weitere Bauteile oder Module aufweisen, wie zum Beispiel einen Luftwärmetauscher zum Übertragen von Wärme von dem Wärmetransportmittel auf zu erhitzende Luft und eine Antriebsvorrichtung, zum Beispiel eine Pumpe, zum Erzeugen einer Strömung des Wärmetransportmittels.

In den Kanälen können jeweils ein oder mehrere Rotationselemente angeordnet sein, um eine Rotationsbewegung des in dem Kanal strömenden Wärmetransportmittels um eine Längsachse des Kanals zu erzeugen. Das jeweilige Rotationselement ist somit in der Lage, der Strömung einer Rotationskomponente beizufügen. Das Rotationselement kann ein passives, also antriebsloses, Rotationselement sein. Das passive Rotationselement kann geometrisch derart gestaltet sein, dass es einen Teil der translatorischen Bewegungsenergie des Wärmetransportmittels in Rotationsbewegungsenergie umwandelt.

Das Rotationselement kann ferner dazu ausgelegt sein, das Wärmetransportmittel innerhalb des Kanals zu vermischen. Das Rotationselement kann in anderen Worten dazu ausgelegt sein, Turbulenz in dem Wärmetransportmittel zu erzeugen. Dies begünstigt die Übertragung von Wärme von der Heizeinrichtung auf das Wärmetransportmittel.

Die Steuereinrichtung ist mit einem Wärmeabgabekörper versehen, zur Abgabe von Abwärme der Steuereinrichtung an das Wärmetransportmittel auf einem Einlassabschnitt des Strömungsweges stromaufwärts des Heizabschnittes. Der Einlassabschnitt bildet in diesem Fall einen Vorheizabschnitt. Die Abwärme der elektronischen Steuereinrichtung wird dann größtenteils nicht direkt an das zu erwärmende "Zielmedium" (zum Beispiel Luft zur Versorgung einer Fahrgastzelle des Fahrzeugs) übertragen, sondern auf das flüssige Wärmetransportmittel. Das hierfür benötigte Bauvolumen kann zum Beispiel im Vergleich zu einer Luftkühlung der elektronischen Steuereinrichtung geringer sein. Ein Luftkanal oder sonstige Bauelemente zur Definition eines Luftströmungsweges innerhalb der Heizvorrichtung und ein Gebläse können entfallen. Der Wärmeabgabekörper kann beispielsweise innerhalb einer Einlasskammer für das Wärmetransportmittel oder innerhalb eines sonstigen dem Heizabschnitt vorgelagerten Strömungsbereichs des Wärmetransportmittels angeordnet sein.

Durch eine geeignete Dimensionierung und geometrische Form des Wärmeabgabekörpers kann in Verbindung mit einer geeigneten Strömungsgeschwindigkeit des Wärmetransportmediums eine ausreichend hohe Wärmeübertragung von der elektronischen Steuereinrichtung über den Wärmeabgabekörper auf das Wärmetransportmedium sichergestellt werden. Auf die Weise lässt sich verhindern, dass das an dem Wärmeabgabekörper vorbeiströmende Wärmetransportmedium, zum Beispiel Wasser, anfängt zu sieden. Ein Sieden des Wärmetransportmediums an dem Wärmeabgabekörper kann unerwünscht sein, da sich hierdurch an dem Wärmeabgabekörper Blasen bilden können, die thermisch isolierend wirken können und damit die Abführung der Abwärme der elektronischen Steuereinrichtung behindern können. Durch eine geeignete Dimensionierung und Gestaltung des Wärmeabgabekörpers kann jedoch zumindest erreicht werden, dass selbst im Falle eines Siedens des Wärmetransportmediums an den Wärmeabgabekörper entstehende Blasen mit dem strömenden Wärmetransportmedium weggespült werden. Es kann daher vorteilhaft sein, dass der Wärmeabgabekörper eine glatte (nicht raue) und/oder eine stromlinienförmige Oberfläche aufweist. Eine raue, unebene und nicht stromlinienförmige Oberfläche kann zwar den Vorteil bieten, dass an der Oberfläche Turbulenzen des Wärmetransportmediums erzeugt werden, die für den Wärmefluss von dem Wärmeabgabekörper in das Wärmetransportmedium günstig sind, doch können sie im Falle eines Siedens des Wärmetransportmediums dazu führen, dass entstehende Blasen an dem Wärmeabgabekörper hängen bleiben. Ist jedoch das Risiko eines Siedens vernachlässigbar, so kann eine turbulenzfördernde Gestaltung der Oberfläche des Wärmeabgabekörpers die vorteilhaftere Option sein.

Der Wärmeabgabekörper kann derart ausgerichtet sein, dass sein Strömungswiderstand für das Wärmetransportmittel minimal ist. Die für das Bewegen des Wärmetransportmittels entlang des Strömungswegs erforderliche Leistung, also die für das Erzeugen der Strömung des Wärmeabgabekörpers erforderliche Leistung, kann auf die Weise minimiert werden. Wird für den Antrieb des Wärmetransportmittels zum Beispiel eine Pumpe verwendet, so kann eine Pumpe mit relativ geringer Leistung und damit relativ geringem Energieverbrauch verwendet werden. Zudem kann auf die Weise die Gefahr von Blasenbildung an dem Wärmeabgabekörper reduziert werden.

Die Heizvorrichtung kann mit einem Luftwärmetauscher zur Übertragung von Wärme von dem Wärmetransportmittel stromabwärts des Heizabschnittes auf Luft ausgestattet sein. Der Luftwärmetauscher kann beispielweise mehrere Kanäle für das Wärmetransportmittel und mehrere Kanäle für die Luft aufweisen, die zueinander benachbart angeordnet sind, um einen möglichst guten Wärmeübergang auf die Luft zu gewährleisten. Die Heizvorrichtung kann ferner eine Wand aufweisen, die den Strömungsweg in dem Vorheizabschnitt wenigstens teilweise definiert, wobei sich der Wärmeabgabekörper von der Wand ausgehend in den Vorheizabschnitt hineinerstreckt. Der Wärmeabgabekörper kann beispielsweise als ein Vorsprung der Wand oder als Stift, Bolzen oder Rippe ausgestaltet sein. Es kann außerdem vorgesehen sein, dass sich der Wärmeabgabekörper bis zu einem gegenüberliegenden Teil der Wand erstreckt. Das in dem Vorheizabschnitt zur Verfügung stehende Volumen kann auf die Weise optimal genutzt werden. Der Wärmeabgabekörper kann zum Beispiel zwei Enden aufweisen, die an gegenüberliegenden Seiten der Wand befestigt sind. Diese Anordnung kann besonders robust sein. An jedem der beiden Enden kann eine elektronische Steuereinrichtung angeordnet sein, sofern die Heizvorrichtung mehrere elektronische Steuereinrichtungen aufweist. Die Heizvorrichtung kann beispielsweise mehrere elektrische Heizeinrichtungen, zum Beispiel mehrere parallel geschaltete Heizwiderstände aufweisen, denen jeweils eine elektronische Steuereinrichtung, zum Beispiel ein Leistungsschalter, zugeordnet ist. Der Wärmeabgabekörper und die Wand können aus einem Stück sein. Dies kann die Fertigung der Heizvorrichtung erleichtern und eine hohe Robustheit sicherstellen. Der Wärmeabgabekörper und die Wand können beispielsweise als ein Formteil aus einem geeigneten möglichst gut wärmeleitenden Material hergestellt sein. Alternativ kann der Wärmeabgabekörper zum Beispiel aus einem möglichst gut wärmeleitenden Material, zum Beispiel einem Metall, zum Beispiel Aluminium, und die Wand aus einem thermisch möglichst gut isolierenden Material, zum Beispiel einem Kunststoff oder Keramik, hergestellt sein. Hierdurch kann zum einen der Wärmeübergang zwischen dem Wärmeabgabekörper und dem Wärmetransportmittel optimiert werden und zum anderen der Verlust von Wärme über die Wand an benachbarte Bauteile oder eine sonstige Umgebung, zum Beispiel Luft, der Heizvorrichtung minimiert werden. Wie schon erwähnt, kann die Heizvorrichtung eine zweite elektronische Steuereinrichtung aufweisen, wobei sich der Wärmeabgabekörper von der ersten Steuereinrichtung bis zu der zweiten Steuereinrichtung erstreckt. Bildlich gesprochen teilen sich in diesem Fall die erste Steuereinrichtung und die zweite Steuereinrichtung einen gemeinsamen Wärmeabgabekörper. Die Herstellungskosten können auf die Weise reduziert und die Robustheit erhöht werden.

Die Heizvorrichtung weist ferner einen Wärmeübertrager zur Übertragung von Wärme von der Heizeinrichtung auf das Wärmetransportmittel in dem Heizabschnitt auf. Der Wärmeübertrager und der Wärmeabgabekörper sind aus einem Stück. Das den Wärmeübertrager und den Wärmeabgabekörper enthaltende Bauteil kann zum Beispiel eine erste Gruppe von Rippen und eine zweite Gruppe von Rippen aufweisen, wobei jede Gruppe mindestens eine Rippe enthält und die erste Gruppe innerhalb des Heizabschnitts des Strömungsweges angeordnet ist, während die zweite Gruppe innerhalb des Vorheizabschnittes des Strömungsweges angeordnet ist. Das heißt, die erste Gruppe von Rippen kann als der Wärmeübertrager oder als Teil des Wärmeübertragers aufgefasst werden, während die zweite Gruppe von Rippen als der Wärmeabgabekörper oder als Teil des Wärmeabgabekörpers aufgefasst werden kann. Benachbarte Rippen können beispielsweise einen Kanal für das Wärmetransportmittel definieren, welcher Teil des Strömungsweges ist.

Die Heizvorrichtung kann ferner ein Verbindungsstück aufweisen, welches den Wärmeübertrager und den Wärmeabgabekörper miteinander verbindet und sich entlang eines nichtgeraden Weges erstreckt, so dass der Wärmewiderstand zwischen dem Wärmeübertrager und dem Wärmeabgabekörper im Vergleich zu einem kürzesten Weg erhöht ist. Der Wärmefluss von der elektrischen Heizeinrichtung zu der elektronischen Steuereinrichtung kann auf die Weise minimiert werden. Das Verbindungsstück kann beispielsweise als eine Sicke oder als mehrere aufeinanderfolgende Sicken ausgeführt sein.

Der erwähnte nicht gerade Weg kann zum Beispiel die Form eines der folgenden Buchstaben haben: L, U, V, S, Z, N, M und W.

Es zeigen:
- Figur 1: eine Draufsicht auf ein Beispiel einer Heizvorrichtung;
- Figur 2: eine Schrägansicht der Heizvorrichtung aus Figur 1;
- Figur 3: eine weitere Schrägansicht der Heizvorrichtung aus Figur 1;
- Figur 4: eine Detailansicht der Heizvorrichtung aus Figur 1;
- Figur 5: eine weitere Schrägansicht der Heizvorrichtung aus Figur 1;
- Figur 6: eine schematische Darstellung eines Beispiels eines Strömungsweges;
- Figur 7: eine schematische Darstellung eines Beispiels eines Wärmeübertragers mit einem Wärmeabgabekörper für eine elektronische Steuereinrichtung;
- Figur 8: eine Schnittansicht eines Beispiels einer Heizvorrichtung;
- Figur 9: eine Schnittansicht eines weiteren Beispiels einer Heizvorrichtung;
- Figur 10: ein Beispiel einer Mischvorrichtung;
- Figur 11: die Mischvorrichtung aus Figur 10 in einem Kanal;
- Figur 12: ein weiteres Beispiel einer Mischvorrichtung;
- Figur 13: die Mischvorrichtung aus Figur 12 in einem Kanal; und
- Figur 14: ein Flussdiagramm.

Bei der nachfolgenden Beschreibung der Zeichnungen bezeichnen gleiche Bezugszeichen gleiche oder vergleichbare Komponenten.

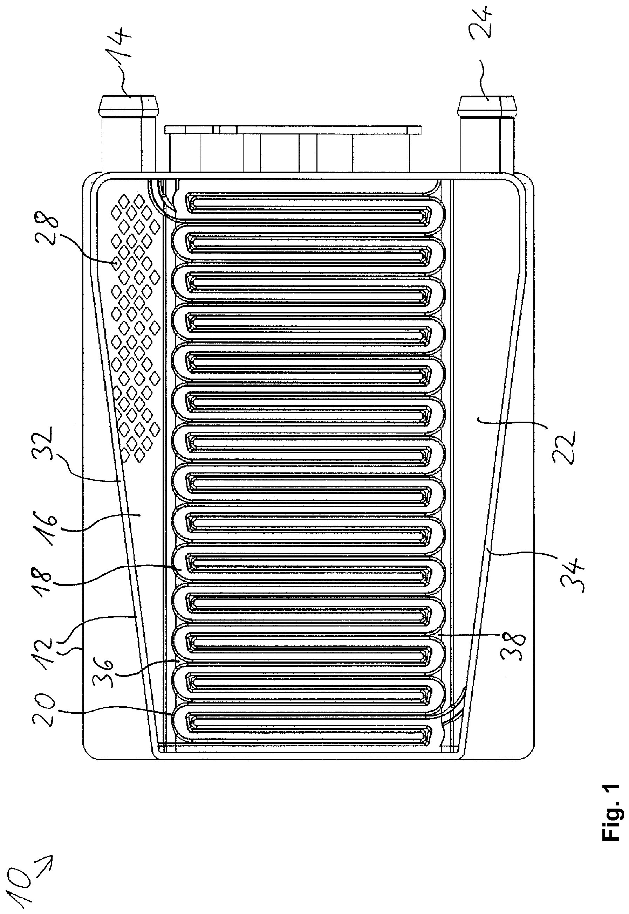

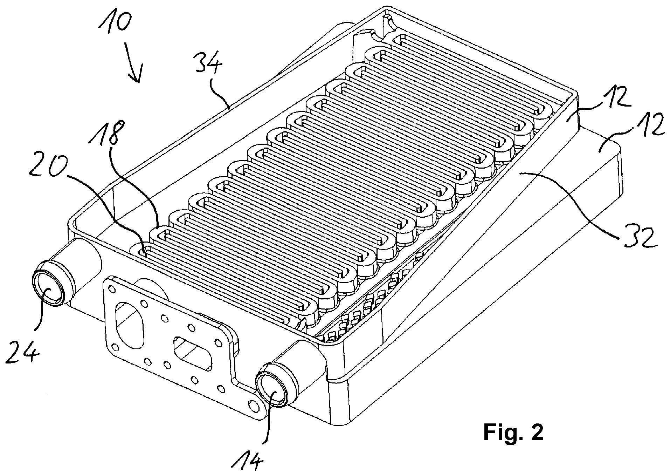

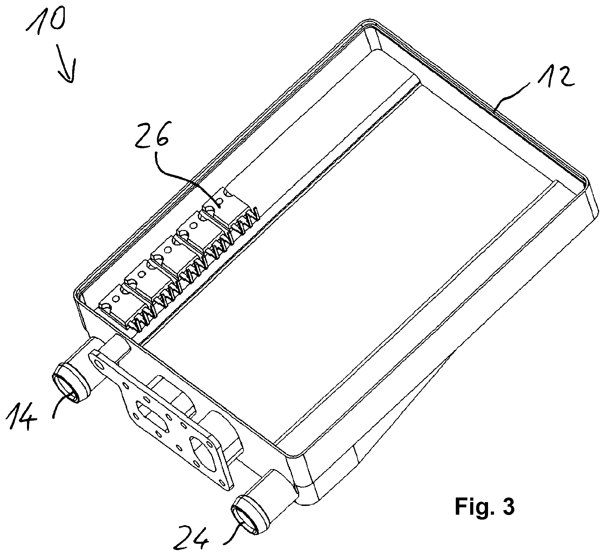

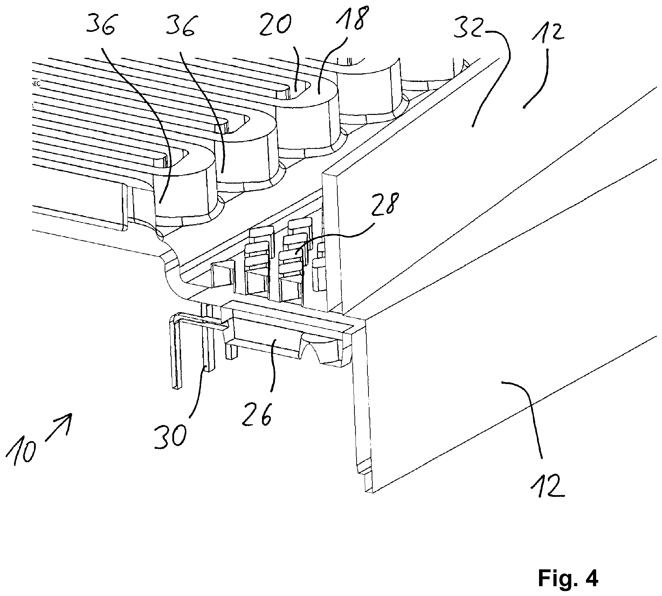

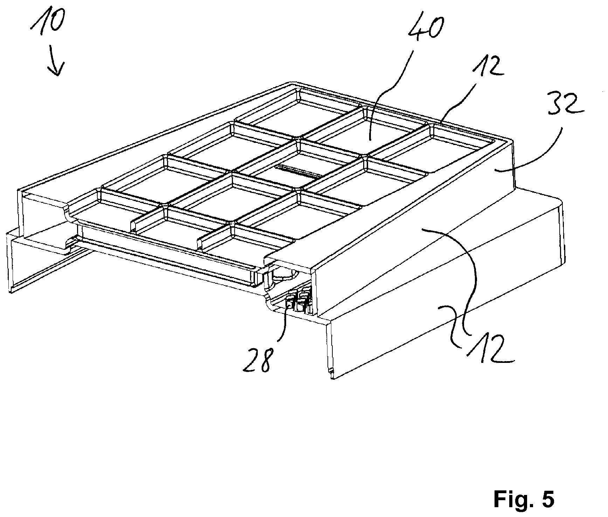

Figuren 1 bis 5 zeigen eine elektrische Heizvorrichtung 10 für ein Fahrzeug, zum Beispiel für ein Kraftfahrzeug oder einen mobilen Wohn- oder Arbeitscontainer. Die Vorrichtung 10 ist in Figuren 1 bis 4 nach oben hin offen dargestellt, um den Blick in einen Innenbereich der Vorrichtung 10 freizugeben. Die Heizvorrichtung 10 weist ein Gehäuse 12 auf. Innerhalb des Gehäuses 12 ist ein Strömungsweg für ein flüssiges Wärmetransportmittel, zum Beispiel Wasser, definiert. In dem gezeigten Beispiel umfasst der Strömungsweg die folgenden Abschnitte in dieser Reihenfolge: einen Einlass 14, eine Einlasskammer 16 (Einlassabschnitt), mehrere durch einen Wärmeübertrager 18 definierte Kanäle 20, eine Auslasskammer 22 (Auslassabschnitt) sowie einen Auslass 24. Die Kanäle 20 sind in strömungstechnischer Hinsicht parallel zueinander geschaltet und verbinden die Einlasskammer 16 mit der Auslasskammer 22.

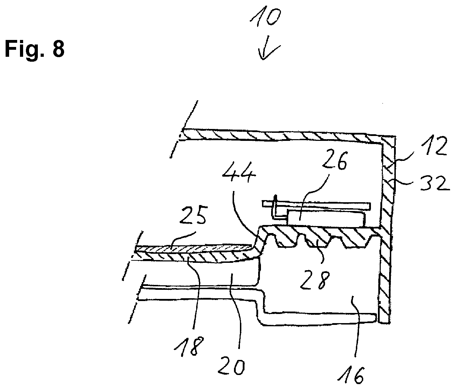

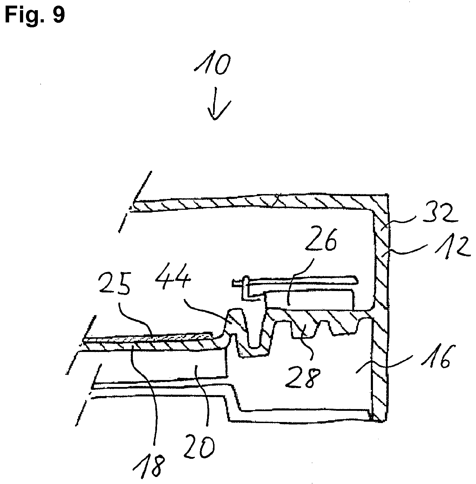

Mindestens eine Heizeinrichtung 25 (gezeigt in Figur 8 und Figur 9) ist in den Wärmeübertrager 18 integriert oder auf oder unter dem Wärmeübertrager 18 angeordnet und mit dem Wärmeübertrager 18 mechanisch derart verbunden, dass der Wärmewiderstand zwischen der Heizeinrichtung 25 und dem Wärmeübertrager 18 möglichst gering ist. In dem gezeigten Beispiel umfasst die Heizvorrichtung 10 eine Vielzahl von elektrischen Heizeinrichtungen 25 (dargestellt in Figur 8 und Figur 9) und eine entsprechende Anzahl an elektronischen Steuereinrichtungen 26 (ebenfalls in Figur 8 und Figur 9 schematisch dargestellt) zum Steuern der individuellen Heizleistung einer jeden der Heizeinrichtungen 25. Jeder Heizeinrichtung 25 ist somit eine elektronische Steuereinrichtung 26 zugeordnet. Die Heizeinrichtung 25 kann ein oder mehrere Heizelemente aufweisen. Die Heizeinrichtung 25 und die Steuereinrichtung 26 können beispielsweise ein Heizwiderstand und ein in Reihe mit dem Heizwiderstand geschalteter Leistungstransistor sein. Alternativ kann einer Gruppe von mehreren Heizeinrichtungen 25 eine gemeinsame Steuereinrichtung 26 zugeordnet sein. Zum Beispiel ist eine Ausführungsform denkbar, bei der die Gruppe alle Heizeinrichtungen 25 der Heizvorrichtung 10 umfasst und diese Gruppe mit einem Leistungsschalter 26 in Reihe geschaltet ist, um die Gesamtleistung der Heizeinrichtungen 25 zu steuern. Sind mehrere Steuereinrichtungen 26 vorgesehen, so können diese in einer gemeinsamen Baueinheit ausgeführt sein. In dem gezeigten Beispiel sind die Steuereinrichtungen 26 jeweils über mindestens zwei elektrische Kontakte 30 kontaktierbar, zum Anlegen einer Versorgungsspannung.

Jede der Steuereinrichtungen 26 ist mechanisch mit einem Wärmeabgabekörper 28 verbunden. Der Wärmeabgabekörper 28 dient der Ableitung von Abwärme der elektronischen Steuereinrichtung 26 an das Wärmetransportmittel in der Einlasskammer 16. Die Einlasskammer 16 wird deshalb auch als Vorheizabschnitt des Strömungsweges bezeichnet. Jeder Steuereinrichtung 26 können ein oder aber mehrere Wärmeabgabekörper 28 zugeordnet sein. Alternativ können die mehreren Wärmeabgabekörper 28 als ein gemeinsamer größerer Wärmeabgabekörper aufgefasst werden. In dem gezeigten Beispiel ragen die Wärmeabgabekörper 28 ausgehend von den Steuereinrichtungen 26 in die Einlasskammer 16 und werden im Betrieb der Heizungsvorrichtung 10 von dem Wärmetransportmittel umspült, wobei Wärme von den Wärmeabgabekörpern 28 auf das Wärmetransportmittel übertragen wird. Die Wärmeabgabekörper 28 und damit die Steuereinrichtungen 26 werden somit gekühlt, während das Wärmetransportmittel vorgewärmt wird. Das vorgewärmte Wärmetransportmittel strömt von der Einlasskammer 16 aus weiter durch die Kanäle 20. Dabei strömt es an dem die Kanäle 20 definierenden Wärmeübertrager 18 entlang und nimmt dabei von den Heizeinrichtungen 25 erzeugte Wärme auf. Jeder der Kanäle 20 oder die Kanäle 20 gemeinsam werden deshalb auch als Heizabschnitt des Strömungsweges bezeichnet. Das somit erhitzte Wärmetransportmedium strömt dann weiter durch die Auslasskammer 22 und verlässt die Heizvorrichtung 10 durch den Auslass 24.

Die Wärmeabgabekörper 28 können beispielsweise jeweils als Rippe mit zum Beispiel rechteckigem oder V-förmigem Querschnitt ausgestaltet sein, um die Wärme von der Steuereinrichtung, zum Beispiel dem Leistungshalbleiter, in das Wärmetransportmittel abzuleiten. Der Wärmeabgabekörper 28 kann damit gleichzeitig zur Lenkung des Wärmetransportmittels verwendet werden. Alternativ kann der Wärmeabgabekörper 28 beispielsweise ein Zapfen, ein Bolzen oder ein Stift sein, um punktuell die Wärme unter der jeweiligen Steuereinrichtung, zum Beispiel unter einer relativ kleinen Chipfläche, abzuleiten. Ein solcher Zapfen, Bolzen oder Stift kann ferner zu einer verbesserten Verwirbelung des Wärmetransportmittels und damit einer erhöhten Wärmeabführung beitragen. Eine Überhitzung der elektronischen Steuereinrichtung kann damit vermieden werden und die Abwärme der Steuereinrichtung wird auch zum Erwärmen des Wärmetransportmediums genutzt.

In dem gezeigten Beispiel wird der Einlassabschnitt 16 nach außen durch eine Wand 32 des Gehäuses 12 begrenzt. Der Auslassabschnitt 22 wird nach außen durch eine Wand 34 des Gehäuses 12 begrenzt. Die Wände 32 und 34 erstrecken sich jeweils von dem Einlass 14 beziehungsweise dem Auslass 24 in einer ersten Richtung beziehungsweise in einer zweiten Richtung, wobei die erste und die zweite Richtung schräg relativ zu zwei der drei Hauptachsen des ansonsten im Wesentlichen quaderförmigen Gehäuses 12 verlaufen. Die Wand 32 bewirkt damit, dass sich der Einlassabschnitt 16 in Strömungsrichtung (also von dem Einlass 14 weg) verjüngt. Die Wand 34 erstreckt sich derart, dass sich der Auslassabschnitt 22 in Strömungsrichtung, also zum Auslass 24 hin, erweitert. Damit wird erreicht, dass in den Kanälen 20 jeweils in etwa derselbe Druck des Wärmetransportmittels besteht.

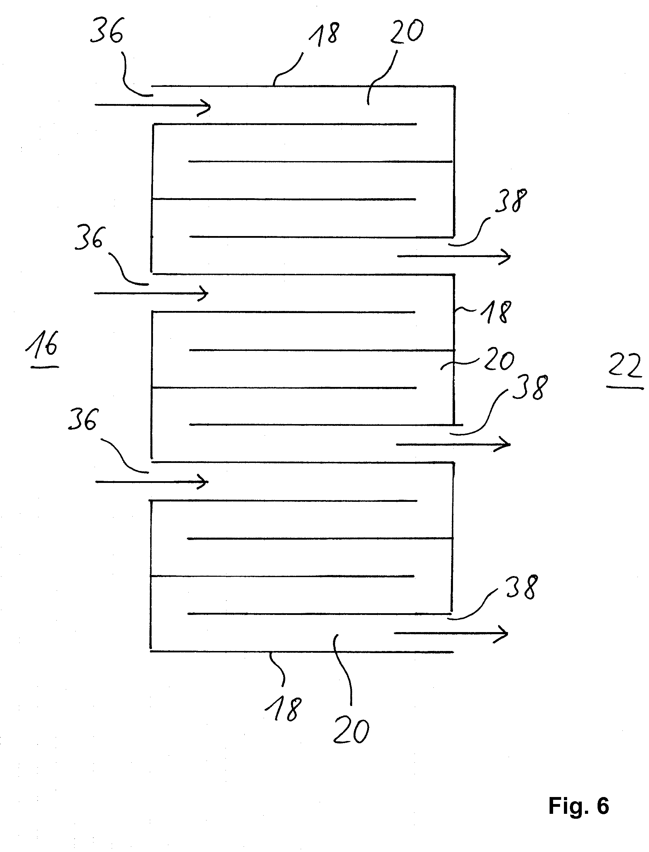

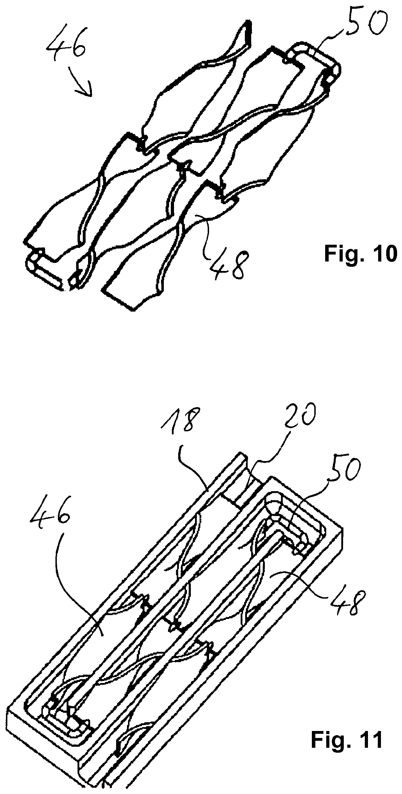

Der durch die Heizvorrichtung 10 definierte Strömungsweg ist ferner in Figur 6 schematisch dargestellt. In dem gezeigten Beispiel werden die Kanäle 20 durch einen entsprechend geformten Wärmeübertrager 18 ausgebildet. Im Betrieb strömt das Wärmetransportmittel gleichzeitig von dem Einlassabschnitt 16 über die Abzweigestellen 36 und die einzelnen Kanäle 20 und mündet in den Mündungsstellen 38 in den Auslassabschnitt 22 ein. Die drei gezeigten Kanäle 20 verlaufen jeweils serpentinenförmig und weisen zum Beispiel jeweils vier Nadelöhrkurven auf. Die Mündungsstelle 38 ist deshalb relativ zu der Abzweigestelle 36 desselben Kanals versetzt. Innerhalb eines jeden Kanales 20 können jeweils eine oder mehrere Mischvorrichtungen zur Erhöhung des Wärmeflusses von dem Wärmeübertrager 18 in das Wärmetransportmittel angeordnet sein (siehe Figuren 10 bis 13).

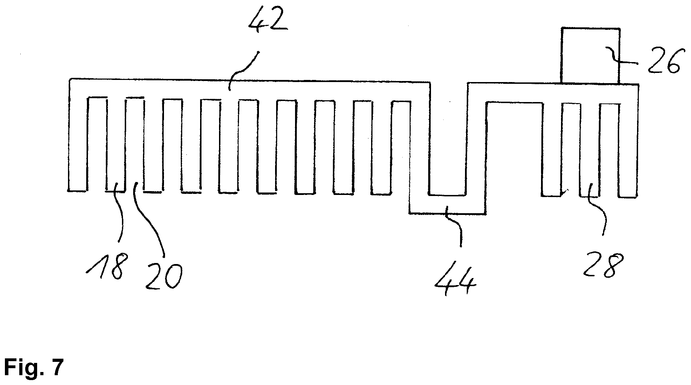

Figur 7 zeigt schematisch eine Seitenansicht eines Beispiels des Wärmeübertragers 18, der Steuereinrichtung 26 und des Wärmeabgabekörpers 28. In dem gezeigten Beispiel umfassen der Wärmeübertrager 18 und der Wärmeabgabekörper 28 jeweils eine Gruppe bestehend aus mehreren Rippen, die auch als Kühlrippen gekannt sind und der möglichst schnellen Übertragung von Wärme auf das Wärmetransportmittel auf dem Heizabschnitt beziehungsweise dem Vorheizabschnitt des Strömungsweges dienen. Die Steuereinrichtung 26, die zum Beispiel ein Halbleiterchip ist, kann an dem Wärmeabgabekörper 28 befestigt sein. In dem gezeigten Beispiel sind der Wärmeübertrager 18 und der Wärmeabgabekörper 28 aus einem Stück. Sie sind über ein Verbindungsstück 44 miteinander verbunden, welches entlang eines nicht geraden Weges verläuft. Hierdurch wird ein Kompromiss zwischen möglichst einfacher Fertigung und hoher Robustheit einerseits und guter thermischer Isolation zwischen dem Wärmeübertrager 18 und dem Wärmeabgabekörper 28 erreicht. Es ist wünschenswert, dass der Wärmeabgabekörper 28 von dem Wärmeübertrager 18 thermisch möglichst gut isoliert ist, zumindest dann, wenn die mit dem Wärmeübertrager 18 in thermischem Kontakt stehende Heizeinrichtung 25 (siehe Figuren 8 und 9) eine höhere Betriebstemperatur erreichen soll als die Steuereinrichtung 26. Das Verbindungsstück 44 ist in dem gezeigten Beispiel im Wesentlichen U-förmig. Das Verbindungsstück 44 hat im Vergleich zu einem hypothetischen geraden Verbindungsstück bei gleicher Distanz der Endpunkte eine größere Länge und damit einen größeren Wärmeübergangswiderstand, wodurch die Erwärmung der elektronischen Steuereinrichtung reduziert wird. Der Wärmeübertrager 18 und der Wärmeabgabekörper 28 sind damit zu einem gewissen Grade voneinander thermisch entkoppelt. In anderen Worten: bei gleichem möglichst geringem geometrischen Abstand zwischen dem Wärmeübertrager 18 und dem Wärmeabgabekörper 28 hat das nicht gerade Verbindungsstück 44 im Vergleich zu einem ebenfalls denkbaren geraden Verbindungsstück einen geringeren Wärmestrom von der Heizeinrichtung 25 zu der Steuereinrichtung 26 zur Folge. Es ergibt sich somit eine kompakte Bausweise, bei der der Wärmeübertrager 18 (Heizungswärmeübertrager) und der Wärmeabgabekörper 28 (Elektronikwärmeübertrager) in einem Bauteil ausgeführt werden können, ohne dass die elektronische Steuereinrichtung 26 von der Heizeinrichtung 25 zu sehr erwärmt wird.

Figur 8 zeigt eine Ausführungsform der Heizvorrichtung 10, bei der der Wärmeübertrager 18 und der Wärmeabgabekörper 28 über ein geradliniges Verbindungsstück 44 miteinander verbunden sind.

Die in Figur 9 schematisch dargestellte Ausführungsform unterscheidet sich davon nur dadurch, dass das Verbindungsstück 44 nichtgerade, zum Beispiel S-förmig, gestaltet ist, um bei dem gleichen Gesamtvolumen der Heizvorrichtung 10 eine bessere thermische Isolierung zwischen dem Wärmeübertrager 18 und dem Wärmeabgabekörper 28, und damit zwischen der Heizeinrichtung 25 und der Steuereinrichtung 26, zu erreichen. Die Steuereinrichtung 26 kann stoffschlüssig an dem Wärmeabgabekörper 28 befestigt sein, um eine möglichst rasche Ableitung der Abwärme der Steuereinrichtung 26 über dem Wärmeabgabekörper 28 zu erreichen.

Figur 10 zeigt ein erstes Beispiel einer Mischvorrichtung 46. Die Mischvorrichtung 46 besteht zum Beispiel aus mehreren Rotationselementen 48 und einem oder mehreren Umlenkelementen 50, die gemeinsam eine Kette bilden. Die Rotationselemente 48 können jeweils schraubenförmig oder propellerförmig sein. Zwei unmittelbar aufeinanderfolgende Rotationselemente 48 können gegeneinander verdreht angeordnet sein, zum Beispiel um 90° gegeneinander verdreht, um eine Vermischung verschiedener "Pakete" des flüssigen Wärmetransportmittels zu bewirken.

Figur 11 zeigt einen der Kanäle 20 aus den Figuren 1 bis 9 zusammen mit der Mischvorrichtung 46. Die Mischvorrichtung 46, hier auch als Rotationskette bezeichnet, ist in den Kanal 20 eingelegt. Die Umlenkelemente 50 befinden sich dabei jeweils an einer Nadelöhrkurve des Kanals 20. Die Rotationskette 46 kann in sich starr sein oder ist zumindest dann im Wesentlichen unbeweglich, wenn sie in dem Kanal 20 liegt. Die Rotationselemente 48 und die Umlenkelemente 50 bestehen nicht notwendigerweise aus einem Material mit hoher Wärmeleitfähigkeit, wenngleich dies die Wärmeübertragung geringfügig verbessern kann. Die Rotationselemente 48 und die Umlenkelemente 50 können beispielsweise aus Kunststoff gefertigt sein. Die Mischvorrichtung 46 ist so gestaltet, dass sie das strömende Wärmetransportmittel zum einen in eine Rotation versetzt und zum anderen einmal oder mehrmals teilt. Die Rotation kann bewirken, dass Moleküle des Wärmetransportmittels an verschiedene Temperaturzonen des Wärmeübertragers geführt werden und eine heiße Grenzschicht an der Kanalwand aufgerissen wird. Jede Teilung des strömenden Wärmetransportmittels kann bewirken, dass Moleküle aus verschiedenen Temperaturzonen vermischt werden.

Als Mischvorrichtung kann beispielsweise eine Vorrichtung verwendet werden, wie sie zum Beispiel aus Mischdüsen für mehrkomponentige Klebstoffe bekannt ist. In der hier beschriebenen Anwendung werden jedoch nicht verschiedene Stoffe, sondern unterschiedliche Temperaturgebiete desselben Wärmetransportmittels vermischt.

Die Anzahl der Umlenkelemente 50 und deren Umlenkwinkel (zum Beispiel zwischen 150° und 180°) können entsprechend der Form des Kanals 20 variiert werden. Da die Mischvorrichtung 46 selbst nur ein relativ kleines Volumen verdrängt und zum Beispiel stromlinienförmig geformt ist, ist es möglich, Strömungsabrisse und Totwassergebiete zu vermeiden. Der von der Mischvorrichtung 46 hervorgerufene zusätzliche Druckverlust kann daher bei deutlicher Steigerung des Wärmeflusses sehr gering sein.

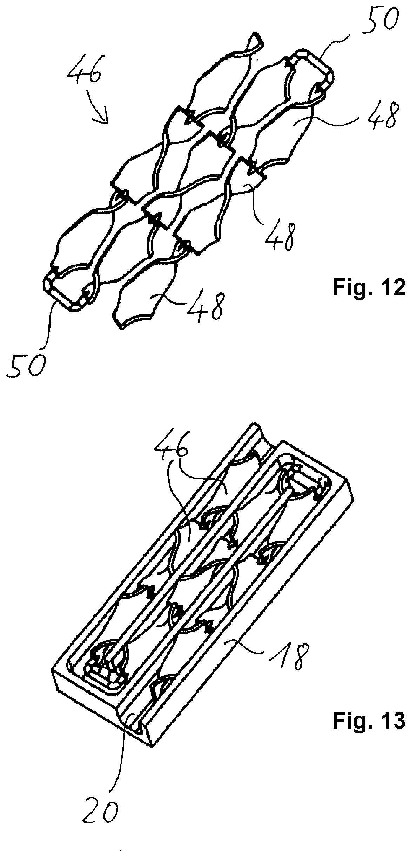

Figur 12 und Figur 13 zeigen ein weiteres Beispiel einer derartigen Mischvorrichtung 46.

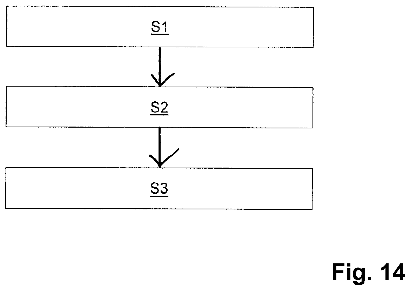

Das Flussdiagramm in Figur 14 veranschaulicht einen Betrieb der Heizvorrichtung 10. In Block S1 wird die Heizvorrichtung 10 eingeschaltet. Zum Beispiel kann eine Pumpe (nicht gezeigt) eingeschaltet werden, um das Wärmetransportmittel entlang des Strömungsweges zu bewegen. Gleichzeitig oder vorher oder nachher kann die elektronische Steuereinrichtung 26 derart betätigt werden, dass die Heizeinrichtung 25 bestromt wird, um Wärme zu erzeugen. Die elektrische Heizeinrichtung 25 gibt folglich Heizwärme an das Wärmetransportmittel in dem Heizabschnitt des Strömungsweges ab (Block S2). Zuvor nimmt das an dem Wärmeabgabekörper 28 entlangströmende und ihn umströmende Wärmetransportmittel Abwärme der Steuereinrichtung 26 über den Wärmeabgabekörper 28 auf, wodurch die Steuereinrichtung 26 gekühlt und das Wärmetransportmittel vorgewärmt wird. In Block S3 wird die Heizvorrichtung 10 ausgeschaltet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Vorrichtung
- 12: Gehäuse
- 14: Einlass
- 16: Einlasskammer
- 20: Kanal
- 22: Auslasskammer
- 24: Auslass
- 25: Heizeinrichtung
- 26: Steuereinrichtung
- 28: Wärmeabgabekörper
- 30: elektrischer Kontakt
- 32: Wand
- 34: Wand
- 36: Abzweigung
- 38: Einmündung
- 40: Deckwand
- 42: Wärmeübertrager
- 44: Verbindungsstück
- 46: Mischvorrichtung
- 48: Rotationselement
- 50: Umlenkelement

## Patentansprüche

1. Heizvorrichtung (10) für ein Fahrzeug, mit
- einem Strömungsweg (14, 16, 20, 22, 24) für ein flüssiges Wärmetransportmittel, und
- einer elektrischen Heizeinrichtung (25), die ein Heizwiderstand ist, zum Erhitzen des Wärmetransportmittels auf einem Heizabschnitt des Strömungsweges;
wobei der Heizabschnitt wenigstens zwei serpentinenförmig verlaufende Kanäle (20) aufweist, die von dem Wärmetransportmittel parallel durchströmbar sind, **dadurch gekennzeichnet, dass** der Strömungsweg aufweist:
- einen Einlassabschnitt (14) stromaufwärts des Heizabschnittes; und
- einen Auslassabschnitt (16) stromabwärts des Heizabschnittes;
- wobei die Kanäle von dem Einlassabschnitt abzweigen (36) und in den Auslassabschnitt münden (38),
- dass die Heizvorrichtung (10) eine elektronische Steuereinrichtung (26) zum Steuern einer Heizleistung der Heizeinrichtung umfasst, wobei die Steuereinrichtung (26) mit einem Wärmeabgabekörper (28) versehen ist, zur Abgabe von Abwärme der Steuereinrichtung (26) an das Wärmetransportmittel auf dem Einlassabschnitt (20) des Strömungsweges, und
- dass die Heizvorrichtung (10) einen Wärmeübertrager (18) zur Übertragung von Wärme von der Heizeinrichtung auf das Wärmetransportmittel in dem Heizabschnitt (20) umfasst, wobei der Wärmeübertrager (18) und der Wärmeabgabekörper (28) aus einem Stück sind.

2. Heizvorrichtung nach Anspruch 1, **dadurch gekennzeichnet, dass** die Querschnittsfläche des Einlassabschnitts in Strömungsrichtung des Wärmetransportmittels den Abzweigungen (36) der Kanäle entsprechend abnimmt.

3. Heizvorrichtung (10) nach Anspruch 1 oder 2, **dadurch gekennzeichnet, dass** der Einlassabschnitt (14) und der Auslassabschnitt (16) länglich sind und sich parallel zueinander erstrecken.

4. Heizvorrichtung (10) nach Anspruch 1, 2 oder 3, **dadurch gekennzeichnet, dass** die Kanäle jeweils in einem rechten Winkel von dem Einlassabschnitt abzweigen und in einem rechten Winkel in den Auslassabschnitt münden.

5. Heizvorrichtung (10) nach einem der vorangehenden Ansprüche, **dadurch gekennzeichnet, dass** jeder der Kanäle genau 2*N Haarnadelkurven aufweist, wobei N eine natürliche Zahl ist.

6. Heizvorrichtung (10) nach einem der vorangehenden Ansprüche, wobei der Strömungsweg weiter aufweist:
- einen Einlass (14) stromaufwärts des Einlassabschnitts, zum Einlassen des Wärmetransportmittels in die Heizvorrichtung; und
- einen Auslass (24) stromabwärts des Auslassabschnitts, zum Auslassen des Wärmetransportmittels aus der Heizvorrichtung.

7. Heizvorrichtung (10) nach einem der vorangehenden Ansprüche, wobei wenigstens einer der Kanäle wenigstens ein Rotationselement (48) aufweist, zum Erzeugen einer Rotation des in dem Kanal (20) strömenden Wärmetransportmittels um eine Längsachse des Kanals.

8. Heizvorrichtung(10) nach Anspruch 7, wobei das Rotationselement (48) dazu ausgelegt ist, außerdem das Wärmetransportmittel innerhalb des Kanals zu vermischen.

9. Heizvorrichtung (10) nach einem der vorhergehenden Ansprüche, mit einem Verbindungsstück (44), das den Wärmeübertrager (18) und den Wärmeabgabekörper (28) miteinander verbindet und sich entlang eines nichtgeraden Weges erstreckt, so dass der Wärmewiderstand zwischen dem Wärmeübertrager (18) und dem Wärmeabgabekörper (28) im Vergleich zu einem kürzesten Weg erhöht ist.

10. Heizvorrichtung (10) nach Anspruch 9, wobei der nichtgerade Weg die Form eines L, U, V, S, Z, N, M oder W hat.

11. Heizvorrichtung (10) nach einem der vorhergehenden Ansprüche, wobei der Wärmeübertrager (18) die Kanäle zumindest teilweise definiert.

12. Verfahren zum Betreiben einer Heizvorrichtung (10) nach einem der Ansprüche 1 bis 11 in einem Fahrzeug, wobei ein flüssiges Wärmetransportmittel gleichzeitig wenigstens zwei serpentinenförmig verlaufende und strömungstechnisch parallel zueinander geschaltete Kanäle der Heizvorrichtung durchströmt und dabei von einer elektrischen Heizeinrichtung mit einem Heizwiderstand des Fahrzeugs erhitzt wird (52), **dadurch gekennzeichnet, dass** das Wärmetransportmittel zunächst einen Einlassabschnitt (14), dann einen Heizabschnitt und dann einen Auslassabschnitt (16) durchströmt, wobei die Kanäle von dem Einlassabschnitt abzweigen (36) und in den Auslassabschnitt münden (38).

## Claims

1. Heating apparatus (10) for a vehicle, having
- a flow path (14, 16, 20, 22, 24) for a liquid heat transport medium, and
- an electrical heating device (25), which is a heating resistor, for heating the heat transport medium in a heating section of the flow path;
wherein the heating section has at least two channels (20), which extend in a serpentine manner and through which the heat transport medium can flow in parallel, **characterized in that** the flow path has:
- an inlet section (14) upstream of the heating section; and
- an outlet section (16) downstream of the heating section;
- wherein the channels branch off (36) from the inlet section and issue (38) into the outlet section,
- **in that** the heating apparatus (10) comprises an electronic control device (26) for controlling a heating power of the heating device, wherein the control device (26) is provided with a heat discharging body (28) for discharging waste heat of the control device (26) to the heat transport medium in the inlet section (20) of the flow path, and
- **in that** the heating apparatus (10) comprises a heat transfer unit (18) for transferring heat from the heating device to the heat transport medium in the heating section (20), wherein the heat transfer unit (18) and the heat discharging body (28) are formed from one piece.

2. Heating apparatus according to Claim 1, **characterized in that** the cross-sectional area of the inlet section decreases in the direction of flow of the heat transport medium in accordance with the branch-offs (36) of the channels.

3. Heating apparatus (10) according to Claim 1 or 2, **characterized in that** the inlet section (14) and the outlet section (16) are elongate and extend parallel to one another.

4. Heating apparatus (10) according to Claim 1, 2 or 3, **characterized in that** the channels each branch off from the inlet section at a right angle and issue into the outlet section at a right angle.

5. Heating apparatus (10) according to one of the preceding claims, **characterized in that** each of the channels has precisely 2*N hairpin curves, where N is a natural number.

6. Heating apparatus (10) according to one of the preceding claims, wherein the flow path further has:
- an inlet (14) upstream of the inlet section for admitting the heat transport medium into the heating apparatus; and
- an outlet (24) downstream of the outlet section for discharging the heat transport medium from the heating apparatus.

7. Heating apparatus (10) according to one of the preceding claims, wherein at least one of the channels has at least one rotation element (48) for generating a rotation of the heat transport medium which flows in the channel (20) about a longitudinal axis of the channel.

8. Heating apparatus (10) according to Claim 7, wherein the rotation element (48) is designed moreover to mix the heat transport medium inside the channel.

9. Heating apparatus (10) according to one of the preceding claims, having a connecting piece (44), which connects the heat transfer unit (18) and the heat discharging body (28) to one another and extends along a non-straight path, such that the thermal resistance between the heat transfer unit (18) and the heat discharging body (28) is increased in comparison to a shortest path.

10. Heating apparatus (10) according to Claim 9, wherein the non-straight path has the shape of an L, U, V, S, Z, N, M or W.

11. Heating apparatus (10) according to one of the preceding claims, wherein the heat transfer unit (18) at least partially defines the channels.

12. Method for operating a heating apparatus (10) according to one of Claims 1 to 11 in a vehicle, wherein a liquid heat transport medium flows simultaneously through at least two channels of the heating apparatus, which extend in a serpentine manner and are connected fluidically in parallel with one another, and in the process is heated (52) by an electrical heating device with a heating resistance of the vehicle, **characterized in that** the heat transport medium flows firstly through an inlet section (14), then through a heating section, and then through an outlet section (16), wherein the channels branch off (36) from the inlet section and issue (38) into the outlet section.

## Revendications

1. Dispositif de chauffage (10) pour un véhicule, comprenant
- une voie d'écoulement (14, 16, 20, 22, 24) pour un agent caloporteur liquide et
- un moyen de chauffage électrique (25), lequel est une résistance de chauffage, servant à réchauffer l'agent caloporteur sur une partie de chauffage de la voie d'écoulement ;
la partie de chauffage comprenant au moins deux conduits (20) s'étendant en forme de serpentin, lesquels peuvent être traversés parallèlement par l'agent caloporteur, **caractérisé en ce que** la voie d'écoulement comprend :
- une partie d'entrée (14) en amont de la partie de chauffage ; et
- une partie de sortie (16) en aval de la partie de chauffage ;
- les conduits bifurquant (36) de la partie d'entrée et débouchant (38) dans la partie de sortie,
- **en ce que** le dispositif de chauffage (10) comporte un dispositif de commande électronique (26) servant à commander une puissance de chauffage du moyen de chauffage, le dispositif de commande (26) étant doté d'un corps d'émission de chaleur (28) servant à transmettre de la chaleur perdue du dispositif de commande (26) à l'agent caloporteur sur la partie d'entrée (20) de la voie d'écoulement, et
- **en ce que** le dispositif de chauffage (10) comporte un échangeur de chaleur (18) servant au transfert de chaleur du moyen de chauffage à l'agent caloporteur dans la partie de chauffage (20), l'échangeur de chaleur (18) et le corps d'émission de chaleur (28) étant réalisés d'une seule pièce.

2. Dispositif de chauffage selon la revendication 1, **caractérisé en ce que** l'aire en section transversale de la partie d'entrée diminue dans le sens d'écoulement de l'agent caloporteur de manière correspondante aux bifurcations (36) des conduits.

3. Dispositif de chauffage (10) selon la revendication 1 ou 2, **caractérisé en ce que** la partie d'entrée (14) et la partie de sortie (16) sont oblongues et s'étendent parallèlement l'une à l'autre.

4. Dispositif de chauffage (10) selon la revendication 1, 2 ou 3, **caractérisé en ce que** les conduits bifurquent respectivement de la partie d'entrée à angle droit et débouchent dans la partie de sortie à angle droit.

5. Dispositif de chauffage (10) selon l'une quelconque des revendications précédentes, **caractérisé en ce que** chacun des conduits comprend exactement 2*N virages en épingle à cheveux, N étant un nombre entier naturel.

6. Dispositif de chauffage (10) selon l'une quelconque des revendications précédentes, dans lequel la voie d'écoulement comprend en outre :
- une entrée (14) en amont de la partie d'entrée, servant à l'entrée de l'agent caloporteur dans le dispositif de chauffage ; et
- une sortie (24) en aval de la partie de sortie, servant à la sortie de l'agent caloporteur hors du dispositif de chauffage.

7. Dispositif de chauffage (10) selon l'une quelconque des revendications précédentes, dans lequel au moins l'un des conduits comprend au moins un élément rotatif (48) servant à produire une rotation de l'agent caloporteur s'écoulant dans le conduit (20) autour d'un axe longitudinal du conduit.

8. Dispositif de chauffage (10) selon la revendication 7, dans lequel l'élément rotatif (48) est en outre conçu pour mélanger l'agent caloporteur à l'intérieur du conduit.

9. Dispositif de chauffage (10) selon l'une quelconque des revendications précédentes, comprenant une pièce de liaison (44) qui relie l'un à l'autre l'échangeur de chaleur (18) et le corps d'émission de chaleur (28) et s'étend le long d'une trajectoire non rectiligne, de telle sorte que la résistance thermique entre l'échangeur de chaleur (18) et le corps d'émission de chaleur (28) soit accrue par comparaison à une trajectoire la plus courte.

10. Dispositif de chauffage (10) selon la revendication 9, dans lequel la trajectoire non rectiligne présente la forme d'un L, d'un U, d'un V, d'un S, d'un Z, d'un N, d'un M ou d'un W.

11. Dispositif de chauffage (10) selon l'une quelconque des revendications précédentes, dans lequel l'échangeur de chaleur (18) définit les conduits au moins partiellement.

12. Procédé permettant de faire fonctionner un dispositif de chauffage (10) selon l'une quelconque des revendications 1 à 11 dans un véhicule, un agent caloporteur liquide traversant simultanément au moins deux conduits, s'étendant en forme de serpentin et connectés de manière fluidique parallèlement les uns aux autres, du dispositif de chauffage et étant réchauffé (52) par un moyen de chauffage électrique comprenant une résistance électrique du véhicule, **caractérisé en ce que** l'agent caloporteur traverse tout d'abord une partie d'entrée (14), puis une partie de chauffage, et puis une partie de sortie (16), les conduits bifurquant (36) de la partie d'entrée et débouchant (38) dans la partie de sortie.
